# EUROPEAN PATENT APPLICATION

(11) **EP 4 647 823 A1**
(43) Date of publication of application: **12.11.2025**
(21) Application number: 25174296.1
(22) Date of filing: 05.05.2025
(51) Int. Cl.: G02B 6/44, G02B 6/50

(54) **OPTICAL FIBER ENCLOSURE**

(30) Priority: 06.05.2024 IN 202411035726
(71) Applicant: Sterlite Technologies Limited, Gurugram, Haryana 122102 (IN)
(72) Inventor: Kumar, Shantha, 122102 Gurugram, Haryana (IN)
(74) Representative: Petraz, Gilberto Luigi

(57) **Abstract**

The present disclosure relates to an optical fiber enclosure (102) comprising a non-circular base unit (106) defined by one or more walls (1110, 1112) having a burying end (1204) and a connection end (1202), and a non-circular top unit (402) defined by an open end (606) and a closed end (602). In particular, the burying end (1204) is an open end configured for subterranean placement beneath a land surface. And, the open end (606) of the non-circular top unit (402) is removably engageable with the connection end (1202) of the non-circular base unit (106). Further, the one or more walls (1110, 1112) of the non-circular base unit (106) are removably hinged along adjacent vertical edges (1114) and partially openable to enable access to optical fiber components inside the non-circular base unit (106).

## Description

### TECHNICAL FIELD

Embodiments of the present disclosure relate to the field of optical fibers and more particularly, relate to the optical fiber enclosure for protecting fiber optical cables and equipment associated with the fiber optical cables within the optical fiber enclosure from contaminants.

This application claims the benefit of Indian Application No. 202411035726 titled "Optical Fiber Enclosure" filed by the applicant on May 6, 2024**,** which is incorporated herein by reference in its entirety..

### Background Art

An optical fiber network finds its presence in every region across the globe. The optical fiber network supports world-wide communication systems and ensures uninterrupted services related to voice calls, internet and the like. Optical fiber cables are the foundation for the optical fiber networks and link one optical fiber network to another optical fiber network. The optical fiber cables comprise optical transmission elements, i.e., optical fibers, that are responsible for linking the optical fiber networks.

Fiber optic communication systems deliver high bandwidth communication capabilities to customers. Optical fiber connectors are an important part of most fiber optic communication systems that allow two optical fibers to be quickly, optically connected without requiring a splice. Further, the fiber optic connectors can be used to optically interconnect two lengths of optical fiber. Also, can be used to interconnect lengths of optical fiber to passive and active equipment.

Expansion of fiber optic based telecommunication service is being extended to a greater diversity of businesses and homes. Many of these extensions of service within neighborhoods, industrial parks and business developments utilize optical fiber distribution cables laid within buried conduit or ductwork. Such optical fiber distribution cables might extend from a larger fiber distribution terminal or pedestal to a smaller fiber access terminal directly adjacent the business or home to which service may be provided. From the fiber access terminal to the home or business, a fiber drop cable may connect to the home or business.

There is an ever-increasing demand for high-speed or high-bandwidth communication channels for delivering high-speed data and video services. To meet this demand, telecommunications service providers are developing networks (sometimes referred to as outside plant networks) that extend the higher bandwidth of fiber optic components all the way to the end-user businesses and homes (referred to as premises). In such networks, there are distribution points where a distribution, feeder or branch cable is interconnected with one or more drop cables that are routed to the premises. At such distribution points, the side coming from the service provider is generally referred to as the central office or CO side while the side leading to the premises is generally referred to as the drop side. A distribution, branch or feeder cable typically includes a sheath surrounding a plurality of buffer tubes with each buffer tube housing a plurality of optical fibers.

Enclosures are used to house fiber optic cable interconnections and splices and certain fiber optic components (e.g., splitters and couplers) at various locations in a fiber optic network. Existing fiber optic enclosures, however, are not well suited for use at distribution points close to the end-user premises. Technicians will have to access the interior of the enclosures at such distribution points on a fairly regular basis to add new splices for the premises of additional subscribers or to disconnect service to subscribers cancelling service. Vault-type enclosures that are buried in the ground are one type of enclosure commonly used in fiber optic networks. Such vaults are thought to be necessary to protect the integrity of the optical fibers and splices. However, to gain access to the splices in the vault, a bulky lid with multiple bolts must be removed and a sealed splice case, also with multiple fasteners and cable sealing provisions, removed from the interior of the vault. As a result, accessing and servicing such vaults is time-consuming, and thus expensive, making them unsuitable for use at distribution points close to premises that will have to be accessed by technicians on a regular basis.

In addition, performing splicing operations in the field can also be very awkward when working with buried vault enclosures. In particular, when the sealed splice case is removed, lengthy slack fiber loops must also be removed from the vault so that the splice case can reach a clean area where the splicing can be performed. Once the splice case is situated in the clean splicing area, actually gaining access to the splices can sometimes involve the removal of over a dozen threaded fasteners. Once the splicing operation is completed, these steps must be performed in reverse order to replace the splice case back in the vault. Failure to properly reseal the cable openings and tighten the fasteners often results in water leakage into the splice case that may cause undesirable optical signal degradation.

A variety of fiber optical cables and equipment(s) associated with the fiber optical cables are located in an optical fiber enclosure. Typically, a base of the optical fiber enclosure is buried under the ground, and an upper portion of the optical fiber enclosure is positioned above the ground. There is a need to protect the fiber optical cables and the equipment(s) associated with the fiber optical cables within the optical fiber enclosure from contaminants, such as weather, water, debris, rodents and animals.

US patent application "US2005207711A1" describes a pedestal unit with a base and a cover assembly. The pedestal unit includes a plate for entering and exiting optical fibers.

Another US patent application "US7526173B2" describes a pedestal unit with a base and a cover assembly. A bracket is mounted on walls of a base assembly to mount other optical fiber components.

Yet another US patent application "US5117067A" describes a pedestal unit with a base and a cover assembly. The pedestal includes a rigid plate member for mounting termination blocks.

Yet another US patent application "US7728224B2" describes a pedestal unit with a base and a cover assembly. A bracket is mounted on walls of the base to mount other optical fiber components. Yet another prior art reference "US7193151B2" describes a pedestal unit with a base and a cover assembly. A bracket is mounted on the walls of the base assembly to mount other optical fiber components.

Yet another US patent application "US7038127B2" discloses about a pedestal enclosure for electronic components, where the pedestal enclosure includes a base section and a cover engageable with the base section so as to define an interior space. The pedestal enclosure further includes a mounting arrangement for releasably mounting a bracket system to the base section.

Yet another US patent application "US7274850B2" discloses about enclosures for housing optical fiber interconnections at distribution points in a fiber optic network.

Yet another US patent application "US7418183B2" discloses about a fiber optic splice enclosure for housing an interconnection contained in a splice tray between at least one optical fiber of a feeder cable and at least one optical fiber of a drop cable.The routing and management of the fiber optic cables in such vaults can also lead to problems. For example, with such vaults, there is a significant risk that a technician will disrupt the unopened buffer tubes (known as "express buffer tubes") that extend in an uninterrupted manner through the vault in the course of performing the splicing operation. Obviously, this issue is of particular significance when the vault is being used at a distribution point to premises that will have to be accessed frequently for field splicing operations. The cable routing and management in such vaults can also be quite complicated. Further increasing the potential for errors by technicians performing work on the equipment in the vault.

Other types of enclosures used in fiber optic networks have similar issues and drawbacks. For instance, despite being installed above-ground, accessing the interior of many pedestal-type enclosures can be quite awkward. Removal and replacement of the cover on the pedestal is a particular problem. Moreover, many pedestal enclosures have complicated cable management systems. These enclosures are also relatively inflexible in their set-up making them difficult or impossible to optimize for the needs of a specific application

While the prior arts cover various solutions to protect the fiber optical cables and the equipment associated with the fiber optical cables within the optical fiber enclosure from contaminants, there still remains a scope for improvement.

Accordingly, to overcome the disadvantages of the prior arts, there is a need for a technical solution that overcomes the above-stated limitations in the prior arts. The present disclosure provides an optical fiber enclosure for protecting fiber optical cables and an equipment associated with the fiber optical cables within the optical fiber enclosure from contaminants

### SUMMARY OF THE DISCLOSURE

Embodiments of the present disclosure provides an optical fiber enclosure for protecting fiber optical cables and equipment(s) associated with the fiber optical cables within the optical fiber enclosure from contaminants, such as weather, water, debris, rodents and animals. In particular, the optical fiber enclosure includes a non-circular base unit defined by one or more walls having a burying end and a connection end. The burying end and the connection end has a cross section that is a substantially rectangular or a substantially square. Moreover, the burying end is an open end configured for subterranean placement beneath a land surface. Further, the optical fiber enclosure includes a non-circular top unit defined by an open end and a closed end. Furthermore, the open end of the non-circular top unit is removably engageable with the connection end of the non-circular base unit. The one or more walls of the non-circular base unit are removably hinged along adjacent vertical edges and partially openable to enable access to optical fiber components inside the non-circular base unit.

According to the first aspect of the present disclosure, the one or more walls of the non-circular base unit are configured to be opened individually to access a base compartment of the non-circular base unit by unlocking exactly one vertical edge. Moreover, the one or more walls are configured to be opened at an angle greater than 90 degrees from a locked position.

According to the second aspect of the present disclosure, the non-circular base unit has one more elevated rib on an outer surface for firmly engaging the non-circular base unit into the land surface. According to the second aspect of the present disclosure, the non-circular base unit includes an auto-lock receiver that automatically engages with a striker-lock pin of the non-circular top unit to secure the open end of the non-circular top unit to the connection end of the non-circular base unit. In particular, the non-circular base unit includes a compressed polymer sealing configured to securely seal the open end of the non-circular top unit with the connection end of the non-circular base unit. Further, the compressed polymer sealing enables sealing in the optical fiber enclosure in a closed configuration and exerts lifting force on the non-circular top unit to assist opening the optical fiber enclosure.

According to the third aspect of the present disclosure,, the non-circular top unit includes a top compartment for accommodating a modular interface compatible for one or more optical components (e.g., splice trays, fiber storage module, patch panel, power backup battery module, CBT, splitter, or the like). Further, the one or more optical components are mounted on the one or more horizontal mounting plates by one or more attachment mechanisms. And, the modular interface is a combination of the entire mounting assembly.

According to the fourth aspect of the present disclosure, the modular interface includes a chassis plate mounted on the connection end of the non-circular base unit. In particular, the modular interface includes a looped mounting frame mounted on the chassis plate. Moreover, the looped mounting frame includes two identical halves mated with each other by one or more fasteners. Further, the looped mounting frame includes two parallel arms perpendicular to the chassis plate to accommodate one or more horizontal mounting plates. Subsequently, the one or more horizontal mounting plates are engaged by the one or more fasteners between the two parallel arms of the looped mounting frame.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein, and the embodiments herein include all such modifications.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 is a pictorial snapshot illustrating a perspective view of an optical fiber enclosure in accordance with an embodiment of the present disclosure;
FIG. 2 is a pictorial snapshot illustrating a perspective view of a non-circular top shell of the optical fiber enclosure in accordance with an embodiment of the present disclosure;
FIG. 3 is a pictorial snapshot illustrating a bottom perspective view of a top cover of the optical fiber enclosure in accordance with an embodiment of the present disclosure;
FIG. 4 is a pictorial snapshot illustrating an upside down view of a non-circular top unit in accordance with an embodiment of the present disclosure;
FIG. 5 is a pictorial snapshot illustrating a sectional view of the non-circular top unit in accordance with an embodiment of the present disclosure;
FIG. 6 is a pictorial snapshot illustrating another front perspective view of the non-circular top unit in accordance with an embodiment of the present disclosure;
FIG. 7 is a pictorial snapshot illustrating another front perspective view of the non-circular top unit including an auto-lock access hole, holes and a striker pin insert molded assembly in accordance with an embodiment of the present disclosure in accordance with an embodiment of the present disclosure;
FIG. 8 is a pictorial snapshot illustrating a cross sectional perspective view of various elements in a non-circular base unit of the fiber optic enclosure in accordance with an embodiment of the present disclosure;
FIG. 9 is a pictorial snapshot illustrating a cross-sectional perspective view of a striker-lock pin of the non-circular top unit engaged with an auto-lock receiver of the non-circular base unit in accordance with an embodiment of the present disclosure;
FIG. 10 is a pictorial snapshot illustrating a perspective view of the non-circular base unit of the optical fiber enclosure in accordance with an embodiment of the present disclosure;
FIG. 11 to FIG. 14 are pictorial snapshots illustrating perspective views of the non-circular base unit in various configurations in accordance with one or more embodiments of the present disclosure;
FIG. 15 is a pictorial snapshot illustrating sectional exploded views of an anchoring stake module integrated with the non-circular base unit in accordance with an embodiment of the present disclosure;
FIG. 16 is a pictorial snapshot illustrating a perspective view of the non-circular base unit with an auto-lock unit in accordance with an embodiment of the present disclosure;
FIG. 17 and FIG. 18 are pictorial snapshot illustrating top perspective views of a primary chassis plate attached with a reinforcement metal plate in accordance with one or more embodiments of the present disclosure;
FIG. 19 is a pictorial snapshot illustrating a front perspective view of the non-circular base unit having the primary chassis plate integrated therein in accordance with an embodiment of the present disclosure;
FIG. 20 to FIG. 21 are pictorial snapshot illustrating perspective views of the primary chassis plate with various elements in accordance with one or more embodiments of the present disclosure;
FIG. 22 is a pictorial snapshot illustrating a perspective view of a flat/round drop cable assembly module in accordance with an embodiment of the present disclosure;
FIG. 23 is a pictorial snapshot illustrating a perspective view of the primary chassis plate locating and securing a looped mounting frame in accordance with an embodiment of the present disclosure;
FIG. 24 is a pictorial snapshot illustrating a perspective view of the looped mounting frame with various elements in accordance with an embodiment of the present disclosure;
FIG. 25 is a pictorial snapshot illustrating an exploded perspective view of the looped mounting frame integrated with the non-circular base unit holding an optical component in accordance with an embodiment of the present disclosure; and
FIG. 26 is a pictorial snapshot illustrating another exploded perspective view of the non-circular base unit holding the looped mounting frame with various optical components in accordance with an embodiment of the present disclosure.

### REFERENCE NUMBERS

| **Reference Number** | **Views and Elements** |
|---|---|
| 100 | Perspective view of optical fiber enclosure |
| 102 | Optical fiber enclosure |
| 104 | Non-circular top shell |
| 106 | Integral bottom structure (i.e., non-circular base unit) |
| 108 | Top cover |
| 200 | Perspective view of non-circular top shell |
| 202-208 | Walls |
| 210-216 | Curved corners |
| 300 | Perspective bottom view of top cover |
| 302 | U-shaped profile channel |
| 400 | Upside down view of non-circular top unit |
| 402 | Non-circular top unit |
| 404 | Top compartment |
| 500 | Cross sectional view of non-circular top unit |
| 600 | Front perspective view of non-circular top unit |
| 602 | Closed end |
| 604 | Volumetric space |
| 606 | Female open end |
| 608 | Striker-lock pin |
| 700 | Front perspective view of non-circular top unit |
| 702 | Auto-lock access hole |
| 704, 706 | Holes for mounting the striker-lock pin |
| 708, 712 | Fasteners passing through the holes |
| 714 | Striker-lock assembly |
| 800 | Cross sectional perspective view of non-circular base unit showing various elements |
| 802 | Rubber sealing cap |
| 804 | Auto-lock hexagon part |
| 806 | Compressed polymer sealing (push rubber spring sealing) |
| 808 | Auto-lock receiver to receive the striker-lock pin of the non- |
| | circular top unit |
| 810 | Auto-lock bumper rubber |
| 812 | Access hole |
| 900 | Cross-sectional perspective view showing the striker-lock pin of the non-circular top unit engaged with an auto-lock receiver unit of the non-circular base unit |
| 1000 | Perspective view of non-circular base unit |
| 1002 | Male hinge feature |
| 1004 | Female hinge feature |
| 1006 | Male interlock face |
| 1008 | Female interlock face |
| 1100 | Perspective view of non-circular base unit |
| 1102 | Male hinge |
| 1104 | Female hinge |
| 1106, 1108 | Shell |
| 1110, 1112 | Wall |
| 1114 | Vertical edges |
| 1116 | Base compartment |
| 1118 | Mounting holes for spacer bolt |
| 1200 | Top front perspective view of non-circular base unit |
| 1202 | Connection end |
| 1204 | Burying end |
| 1206 | Hinge means (i.e., Hinge pin) |
| 1300 | Front perspective view of non-circular base unit |
| 1302 | RTV silicone applied on or forming a male interlock face and a female interlock face |
| 1400 | Front perspective view of non-circular base unit |
| 1402 | Anchoring bolt holes |
| 1404 | Bottom flange |
| 1406, 1408 | Ribs |
| 1500 | Sectional exploded view of anchoring stake module |
| 1502 | Anchoring stake module (or Grounding kit) |
| 1504 | U-shaped channel |
| 1506 | C-shaped sheet metal bracket |
| 1508 | Flanged hexagonal nuts |
| 1510 | Washer |
| 1512 | Spacer bolt |
| 1514 | External thread |
| 1600 | Front perspective view of non-circular base unit with auto-lock unit |
| 1602 | Recessed pocket feature for auto-lock receiver unit |
| 1700 | Top perspective view of primary chassis plate attached with reinforcement metal plate |
| 1702 | Tapered guide lead-in features |
| 1704, 1706, 1708, 1710 | One or more recess |
| 1712 | Threaded brass inserts |
| 1800 | Exploded perspective view of primary chassis plate attached with reinforcement metal plate |
| 1802 | Reinforcement metal plate |
| 1804 | Primary chassis plate |
| 1900 | Front perspective view of non-circular base unit having primary chassis plate integrated therein |
| 1904 | One or more attachment mechanisms for mounting the primary chassis plate |
| 2000 | Perspective view of primary chassis plate with various elements |
| 2002 | Grounding bracket |
| 2004 | Holding member (i.e., Threaded fastener) |
| 2006 | L shaped member (L shaped brackets) |
| 2100 | Perspective view of primary chassis plate with various elements |
| 2102 | Optical fiber cable(s) |
| 2104 | Cable clamp and mounting brackets (solid stop cable clamp mounting brackets or one or more cable clamp) |
| 2106, 2108 | Solid stop member (i.e., Solid stop cable clamp) |
| 2200 | Perspective view of flat/round drop cable assembly module |
| 2201 | Drop cable assembly module |
| 2202 | Drop cable bracket assembly |
| 2204, 2208 | Side plates (i.e., right side mount bracket and left side mount bracket) |
| 2206 | Drop cable tie bracket |
| 2210 | Drop cable FRP bracket |
| 2212 | One or more fiber strength members (Fiber-reinforced plastic rods or wires) |
| 2214 | Optical fiber loose tubes |
| 2300 | Perspective view of primary chassis plate locating and securing a looped mounting frame |
| 2302 | Horizontal mount plate |
| 2310 | Looped mounting frame |
| 2312 | Fastening means |
| 2400 | Perspective view of looped mounting frame with various elements |
| 2402 | Unite bracket plate |
| 2404 | Looped mounting frame equal halves |
| 2406, 2408 | Two parallel arms |
| 2500 | Exploded perspective view of looped mounting frame integrated with non-circular base unit |
| 2502 | Storage module |
| 2600 | Exploded perspective view of non-circular base unit holding looped mounting frame with various optical components |

The optical fiber enclosure is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### The following brief definition of terms shall apply throughout the present disclosure:

Optical fiber cable includes a plurality of fibers and carries information in the form of data between two places using light technology. The optical fiber cable 100 is a cable used for carrying light over long distances. Furthermore, the optical fiber cable 100 may simply be used to transmit optical signals which may carry sensor data or communication data.

Term optical fiber enclosure includes a non-circular base unit defined by one or more walls having a burying end and a connection end. The burying end and the connection end has a cross section that is a substantially rectangular or a substantially square. The burying end is an open end and is configured for subterranean placement beneath a land surface. Further, the optical fiber enclosure includes a non-circular top unit defined by an open end and a closed end. The open end of the non-circular top unit is removably engageable with the connection end of the non-circular base unit. The one or more walls of the non-circular base unit are removably hinged along adjacent vertical edges and partially openable to enable access to optical fiber components inside the non-circular base unit.

Term one or more walls of the non-circular base unit are configured to be opened individually to access a base compartment of the non-circular base unit by unlocking exactly one vertical edge. The one or more walls are configured to be opened at an angle greater than 90 degrees from a locked position.

Term non-circular base unit includes an auto-lock receiver that automatically engages with a striker-lock pin of the non-circular top unit to secure the open end of the non-circular top unit to the connection end of the non-circular base unit. Further, the non-circular base unit includes a compressed polymer sealing configured to securely seal the open end of the non-circular top unit with the connection end of the non-circular base unit. The compressed polymer sealing enables sealing in the optical fiber enclosure in a closed configuration and exerts lifting force on the non-circular top unit to assist opening the optical fiber enclosure. Furthermore, the non-circular base unit has one more elevated ribs on an outer surface for firmly engaging the non-circular base unit into the land surface.

Term non-circular top unit includes a top compartment for accommodating a modular interface compatible for one or more optical components (e.g., splice trays, fiber storage module, patch panel, power backup battery module, CBT, splitter, or the like). The one or more optical components are mounted on the one or more horizontal mounting plates by one or more attachment mechanisms.

Term modular interface is a combination of the entire mounting assembly. The modular interface includes a chassis plate mounted on the connection end of the non-circular base unit. Further, the modular interface includes a looped mounting frame mounted on the chassis plate, where the looped mounting frame includes two identical halves mated with each other by one or more fasteners. The looped mounting frame includes two parallel arms perpendicular to the chassis plate to accommodate one or more horizontal mounting plates. The one or more horizontal mounting plates are engaged by the one or more fasteners between the two parallel arms of the looped mounting frame.

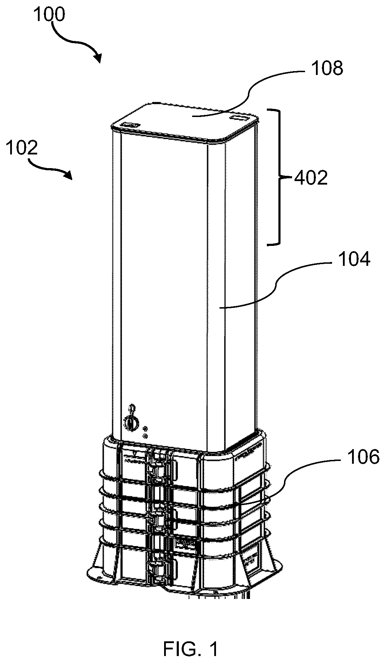

FIG. 1 is a pictorial snapshot illustrating a perspective view (100) of the optical fiber enclosure (102). The optical fiber enclosure (102) is also called an optical termination pedestal, a pedestal enclosure, a fiber access terminal, and a fiber pedestal. The optical fiber enclosure (102) is used at a branch point in a fiber optic communications network.

In particular, the optical fiber enclosure (102) includes a non-circular top shell (104), a non-circular base unit (106), and a top cover (108). The non-circular top shell (104) is a hollow body positioned over the non-circular base unit (106), and is covered by the top cover (108).

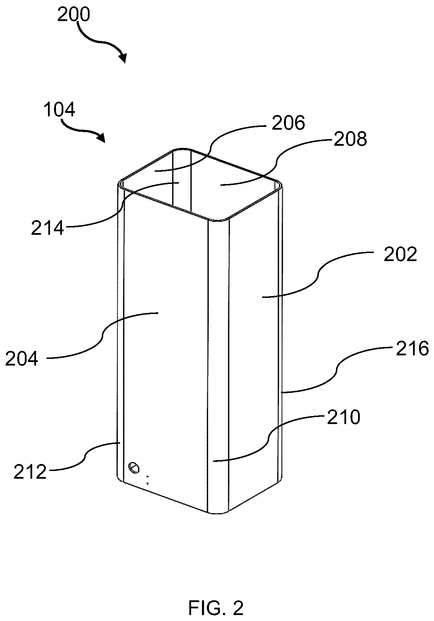

FIG. 2 a pictorial snapshot illustrating a perspective view (200) of the non-circular top shell (104) of a non-circular top unit (402) of the optical fiber enclosure (102). A rectangular cross section profile of the non-circular top shell (104) includes four walls (202-208) and four curved corners (210-216) to form the non-circular top shell (104) by processes including, but not limited to, plastic extrusion processes, injection molding processes, roto-molding processes, and blow molding processes.

Shape of the non-circular top shell (104) and the non-circular top unit (402) may be rectangular or square. Alternatively, the shape may be any shape known in the art.

In accordance with an embodiment of the present disclosure, the non-circular top unit (402) can accommodate larger sized optical components such as Connectorized Block Terminals (CBT) in lesser area while a circular top unit requires more space as compared to the non-circular top unit (402). The CBT is a fiber drop terminal which receives an input cable and provides a plurality of output drop cables.

In alternative embodiment of the present disclosure, the shape of the non-circular top unit (402) may vary based on the requirement, usage and application.

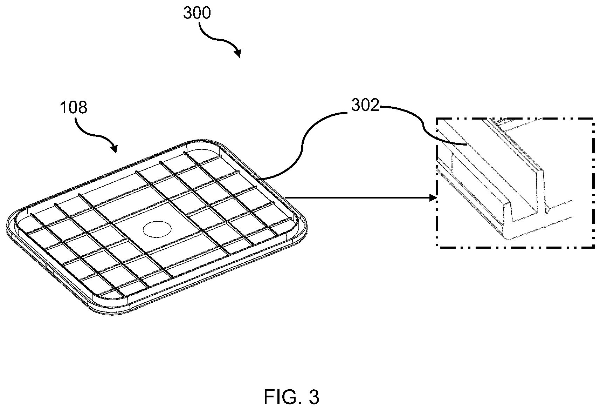

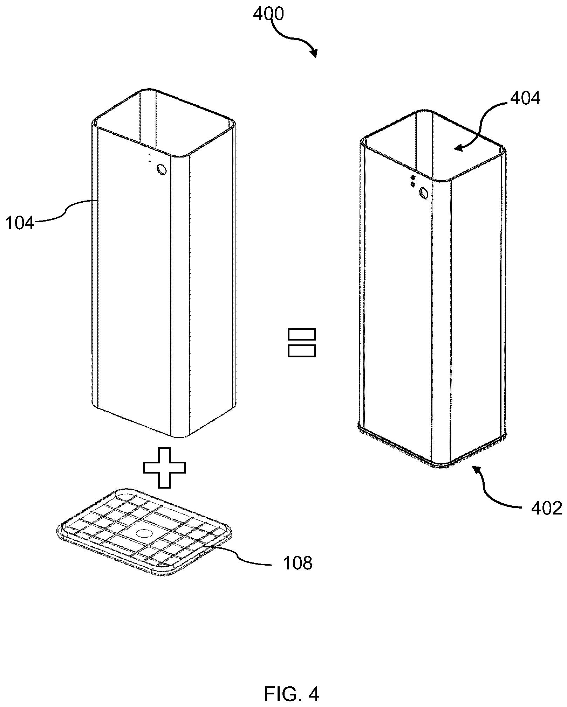

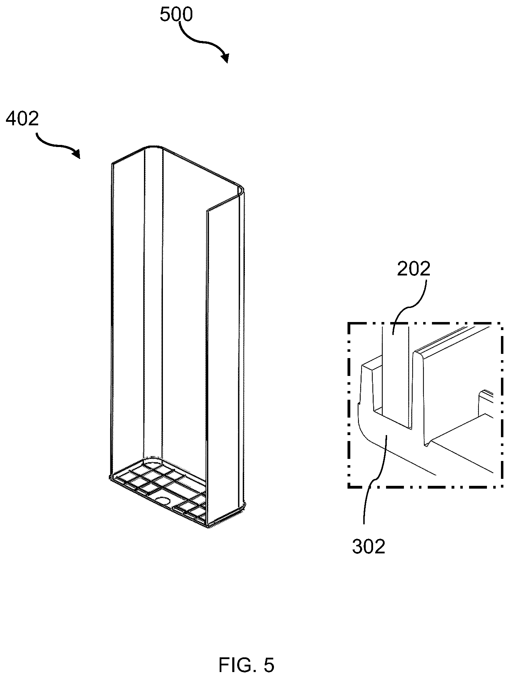

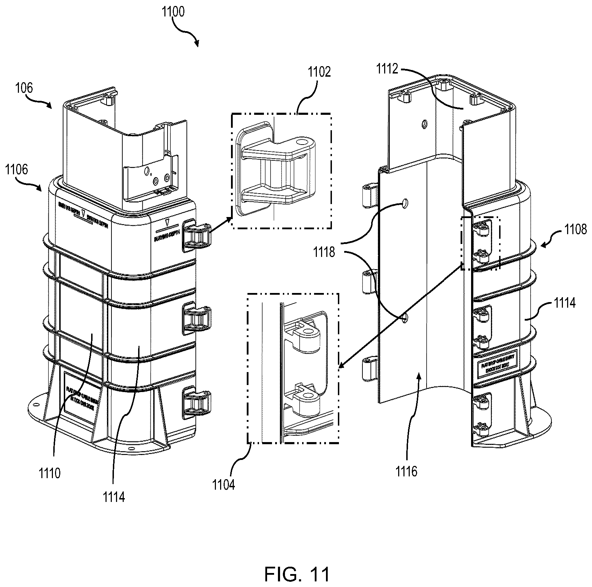

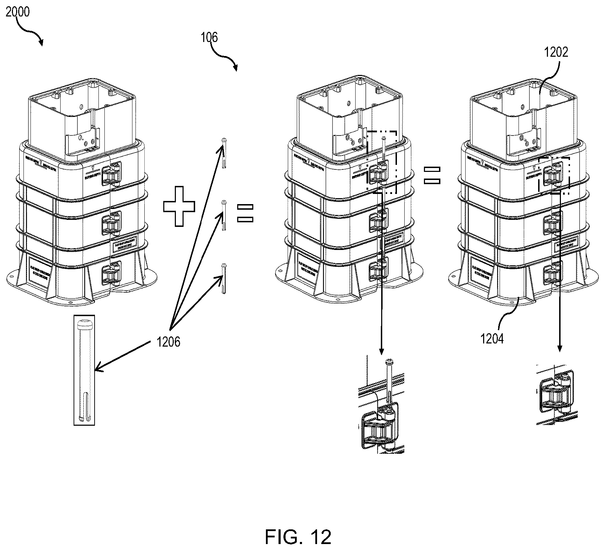

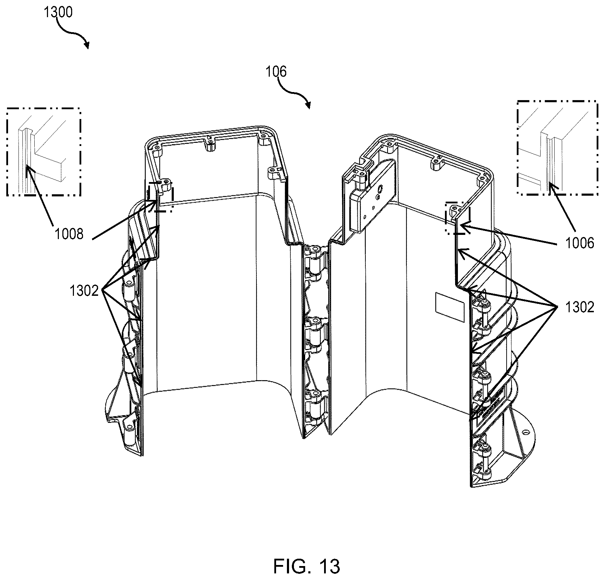

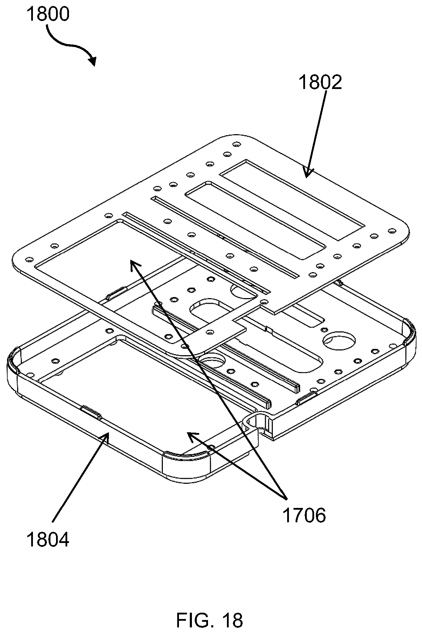

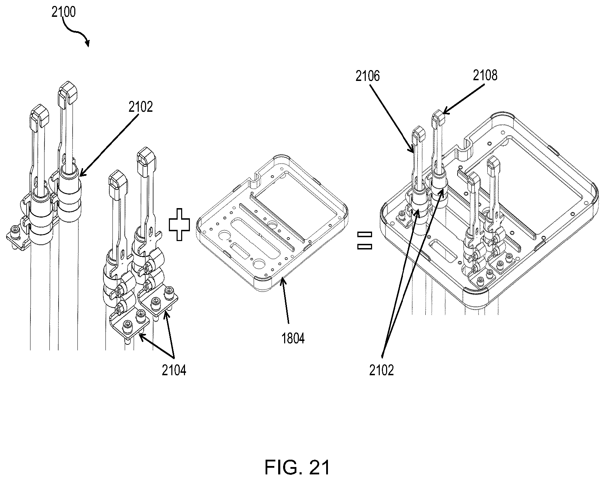

In accordance with an embodiment of the present disclosure, the top end of the non-circular top shell (104) mates with the top cover (108) to form the non-circular top unit (402) as shown in FIG. 4 and an inner female profile of the non-circular top unit (402) mates with a male profile of the non-circular base unit (106). In particular, an open-end female profile of the non-circular top unit (402) mates with a male profile of the non-circular base unit (106). Moreover, a rectangular profile of the non-circular top unit (402) is assembled onto a rectangular profile of the non-circular base unit (106), wherein an open end (606) of the non-circular top unit (402) is removably engaged to a connection end (1202) (as shown in FIG. 12) of the non-circular base unit (106). These details are further elaborated below in conjunction with FIG. 3 to FIG. 26.

FIG. 3 a pictorial snapshot illustrating a bottom perspective view (300) of the top cover (108) of the optical fiber enclosure (102). In particular, the top cover (108) secures the non-circular top shell (104) using adhesives / bonding agents within a U-shaped profile channel (302) running all around a periphery of the top cover (108). The adhesives / bonding agents in viscous liquid form are poured into the U-shaped profile channel (302) of the top cover (108) which forms a liquid pool. The adhesives / bonding agents seal fine gaps between walls of the U-shaped profile channel (302) and the walls of the non-circular top shell (104) all around due to flow displacement of the liquid adhesives / bonding agents. This forms a sealed bonding between an extruded non-circular top shell face and the top cover (108) resulting in a single one side closed non-circular top unit (402).

In accordance with an embodiment of the present disclosure, the top cover (108) may be attached to the non-circular top shell (104) to form the non-circular top unit (402) using processes including, but not limited to, ultrasonic welding processes, plastic welding processes, heat sealing processes, adhesives including epoxies, Polyvinyl chloride (PVC) solvent cements, bonding processes.

FIG. 4 - FIG. 7 are pictorial snapshots illustrating an upside down view (400), a cross-sectional view (500), a front perspective view (600) and another front perspective view (700) of the non-circular top unit (402) .

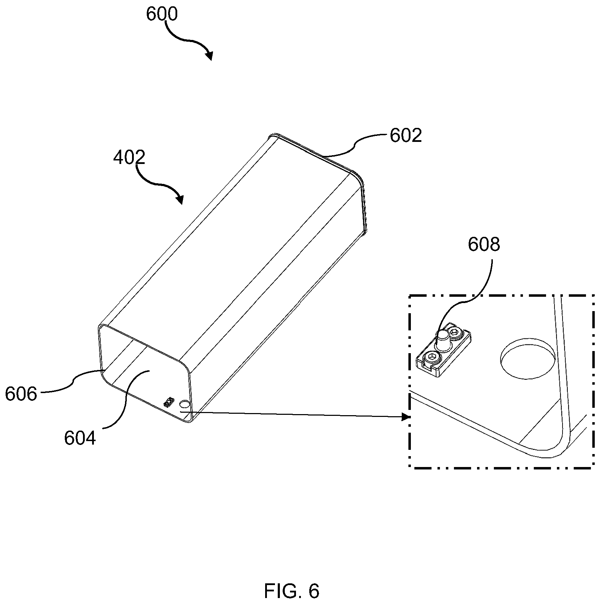

Referring to FIG. 6, a structure of the non-circular top unit (402) is open at one end (606) and closed on the other end (602). In particular, the open end (606) of the non-circular top unit (402) engages with the non-circular base unit (106). Moreover, the closed end (602) and the open end (606) of the non-circular top unit (402) are, but not limited to, substantially rectangular or substantially square structure. Further, the rectangular / square shape of the non-circular top unit (402) creates more volumetric space (604) which thereupon creates opportunities for the universal pedestal.

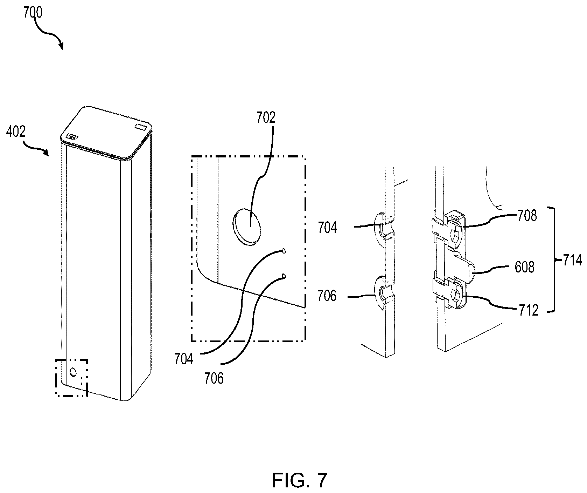

FIG. 7 illustrates the non-circular top unit (402) including an auto-lock access hole (702), holes (704, 706), and fasteners (708, 712) passing through the holes (704, 706) In particular, the auto-lock access hole (702) is created to allow an insertion of a telecom-can-216 tool. The holes (704 and 706) are drilled for inserting threaded brass inserts. Further, the holes (704, 706) and the striker-lock pin (608) form a striker-lock assembly (714), which is mounted on the non-circular top unit (402) using threaded fastener(s) (or any other fastening means) at drilled hole positions and addresses installation challenges.

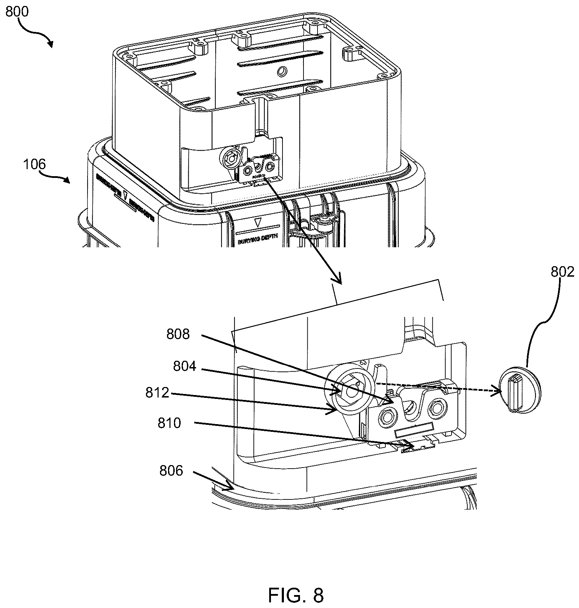

FIG. 8 a pictorial snapshot illustrating a cross sectional perspective view (800) of various element in the non-circular base unit (106). In particular, the non-circular base unit (106) comprises a rubber sealing cap (802), an auto-lock hexagon part (804), a compressed polymer sealing (e.g., push rubber spring sealing) (806), the auto-lock receiver (or snap auto-lock receiver) (808), and an auto-lock bumper rubber (810) to secure the non-circular top unit (402).

In accordance with an embodiment of the present disclosure, the compressed polymer sealing (806) is configured to securely seal the open end (606) (shown in FIG. 6) of the non-circular top unit (402) with the connection end (1202) (shown in FIG. 12) of the non-circular base unit (106). Moreover, the compressed polymer sealing (806) works as a sealing in the optical fiber enclosure (102) in a closed configuration and pushes the non-circular top unit (402) upward while opening the optical fiber enclosure (102) by expending the compressed polymer sealing (806) to provide assistance in lifting the non-circular top unit (402). Further, the compressed polymer sealing (806) is configured to securely seal the open end (606) of the non-circular top unit (402) with the connection end (1202) of the non-circular base unit (106). Furthermore, the compressed polymer sealing (806) enables sealing in the optical fiber enclosure (102) in a closed configuration and exerts lifting force on the non-circular top unit (402) to assist opening the optical fiber enclosure (102).

In accordance with an embodiment of the present disclosure, when the non-circular top unit (402) is inserted onto the non-circular base unit (106) and pushed down against the resistance of the compressed polymer sealing (806) and the auto-lock bumper rubber (810), the striker-lock pin (608) of the non-circular top unit (4402) engages with the snap auto-lock receiver (808) during the downward motion and gets locked into it. Hence, the non-circular top unit (4402) is now locked to the non-circular base unit (106) which houses the snap auto-lock receiver (or receiver) (808).In order to unlock the non-circular top unit (402), the telecom-can-216 tool can be inserted onto the auto-lock hexagon part (804) and turned clockwise which releases the striker-lock pin (608) from the snap auto-lock receiver (808) and the compressed polymer sealing (806), and the auto-lock bumper rubber (810) further lifts up the non-circular top unit (402) vertically just enough to free the striker-lock pin (608) from the receiver (808). Further, the compressed polymer sealing (push rubber spring seal) (806) is made of engineering grade rubber located on the non-circular base unit (106). The compressed polymer sealing (push rubber spring seal) (806) serves to cushion the non-circular top unit (402) and provide spring action to facilitate lifting during the unlock operation.

In accordance with an embodiment of the present disclosure, the optical fiber enclosure (102) is opened using the telecom-can-216 tool by accessing an access hole (812) and by actuating the auto-lock hexagon part (804) located in the access hole (812) clockwise that releases the striker-lock pin (608) of the non-circular top unit (402). The top cover (108) has a cut out hole that provides access to the auto-lock hexagon part (804). The access hole is plugged using a rubber sealing cap (802). The rubber sealing cap (802) provides protection to the optical fiber enclosure (102) from dust and water ingress.

When the non-circular top unit (402) is placed on the non-circular base unit (106) and pushed down, the auto-lock hexagon part (804) is activated, thereby locking the non-circular top unit (402) with the non-circular base unit (integral base structure) (106) resulting in a completely locked optical fiber enclosure (102). Hence, the internal optical elements of the optical fiber enclosure (102) are protected from external environmental effects including sunlight, wind, dust, biological life forms, rain, floods and fire and against unauthorized access.

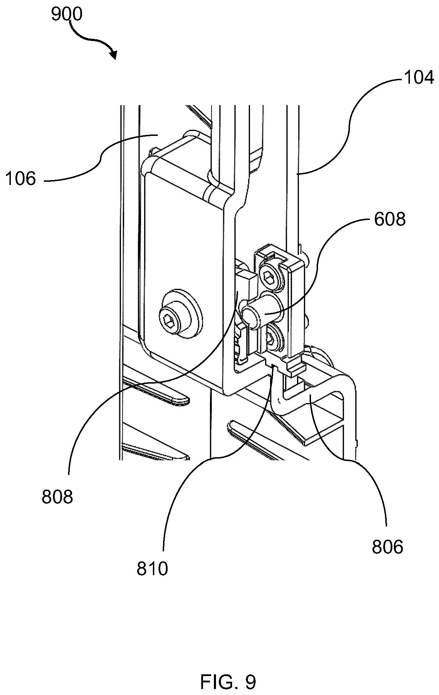

FIG. 9 is a pictorial snapshot illustrating a cross-sectional perspective view of a striker-lock pin of the non-circular top unit engaged with an auto-lock receiver of the non-circular base unit in accordance with an embodiment of the present disclosure. The striker-lock pin (608) automatically engages with an auto-lock receiver (or snap auto-lock receiver) (808) located at the connection end (1202) of the non-circular base unit (106) to secure the open end (606) of the non-circular top unit (402). Further, the striker-lock pin (608) performs an autolocking and retention of the non-circular top unit (402) with the non-circular base unit (106).

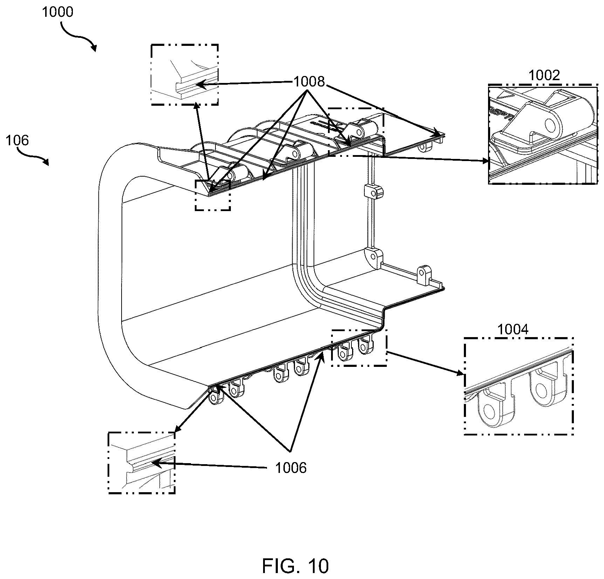

FIG. 10 - FIG. 14 are pictorial snapshots illustrating a perspective view (1000 -1400) of the non-circular base unit (106) of the optical fiber enclosure (102) in various configurations.

In particular, the non-circular base unit (106) includes a first shell (1106) and a second shell (1108) identical to the first shell (1106) hinged together and partially openable to access optical fiber components inside the non-circular base unit (106). Each of the first shell (1106) and the second shell (1108) is opened at an angle greater than 90 degrees from a plane joining hinge means (1206). Further, the non-circular base unit (106) defined by one or more walls (1110, 1112) forms a burying end (1204) and the connection end (1202).

In particular, the burying end (1204) is an open end, which is buried under a land surface. Moreover, the burying end (1204) is configured for subterranean placement beneath the land surface. Further, the burying end (1204) and the connection end (1202) has a cross section that is substantially rectangular or substantially square. The substantially rectangular or substantially square cross-section of the burying end (1204) and the connection end (1202) allows for more efficient use of space, particularly in confined areas.

In accordance with an embodiment of the present disclosure, the non-circular base unit (106) includes the one or more walls (1110, 1112), where adjacent wall sections from the one or more walls (1110, 1112) are removably hinged along adjacent vertical edges (1114). In particular, the one or more walls (1110, 1112) is partially openable to enable access to optical fiber components inside the non-circular base unit (106). Moreover, the partially openable wall sections of the non-circular base unit (106) enable easy access to the optical fiber components, addressing the problem of accessibility in buried portions of existing high-density enclosures. Further, allowing individual opening of the wall sections facilitates access to specific areas within a base compartment (1116).

In accordance with an embodiment of the present disclosure, the one or more walls (1110, 1112) are configured to be opened at an angle greater than 90 degrees from a locked position. Opening of the one or more walls (1110, 1112) at angles greater than 90 degrees provide wider access to the base compartment (1116), so as to facilitate easier maintenance of components in the optical fiber enclosure (102) even after the installation of the optical fiber enclosure (102).

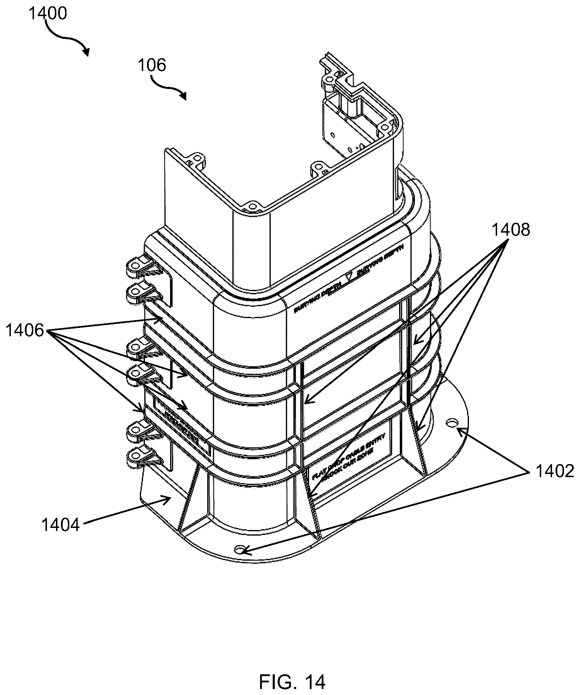

In accordance with an embodiment of the present disclosure, the one or more walls (1110, 1112) of the non-circular base unit (106) are configured to be opened individually to access the base compartment (1116) of the non-circular base unit (106) by unlocking exactly one vertical edge. Further, the non-circular base unit (106) includes one or more elevated ribs (1406, 1408), as shown in FIG. 14, on an outer surface of the non-circular base unit (106) for firmly engaging the non-circular base unit (106) into the land surface.

In accordance with an embodiment of the present disclosure, the one or more elevated ribs (1406, 1408) enhances stability and facilitates secure placement of the optical fiber enclosure (102) in soil, addressing installation challenges associated with the existing enclosures.

In accordance with an embodiment of the present disclosure, the non-circular base unit (106) includes two similar halves (i.e., two similar C-shaped body) which engage mutually with each other to form as single structure. Further, the non-circular base unit (106) includes male hinge features (1002) on one side of the C-shaped body and female hinge features (1004) on the opposite side, i.e., another side of the C-shaped body. Two side faces of the male hinge features (1002) and the female hinge features (1004) have a male interlocking shape and a female interlocking shape, respectively.

In accordance with an embodiment of the present disclosure, the two halves are basically the same parts designed to self-mate with itself when positioned by 180 degrees and facing each other. When the same two halves are placed facing one another (where two halves are joined with U-shaped male female joints and threaded fastener), the male and female hinge features (1002, 1004) engage and interlock with one another forming the single structure. In particular, the two side faces with male and female interlock shapes of both the bottom housings engage and achieve interlocking at face to face level. Hinge means (e.g., hinge pin) (1206) are inserted into the interlocked male and female hinges (1102, 1104). Fixing the three hinge pins (1206) on one side of the interlocked structure allows the non-circular base unit (106) to open and close in a book like manner (upto 160 degrees) allowing access to the optical fiber-cables during installation and also to partially open post deployment to inspect or access of the optical fiber cables.

Further, the mating faces of the non-circular base unit (106) have a male interlocking feature and a female interlocking feature providing interlocking strength to the final structure. By adding room temperature vulcanization compound also called as silicone gasket maker to the interlock faces of the two halves, absolute air tightness and water tightness is achieved. Furthermore, face to face interlocking with room temperature vulcanization compound is applied on the two halves faces just before closing the two shells (1106, 1108) together and the hinge means (e.g., 3 hinge pins) (1206) is fixed on the remaining 3 hinges. The three hinge pins (1206) are inserted after closing the two halves together.

In accordance with an embodiment of the present disclosure, the combination of male and female hinges (1102, 1104) and the hinge pins and the interlock features on the mating faces when engaged results in a single sturdy integral base structure which during deployment is anchored firmly into the ground. This technology proves very user-friendly during deployment as it allows the field engineers to keep the halves in semi-open condition to access cables, ports, and also carry out inspection of ducts and cables. Further, RTV silicone (1302) is applied on (or forms) a male interlock face (1006) and a female interlock face (1008).

In accordance with an embodiment of the present disclosure, the one or more elevated ribs (1406, 1408) are provided on base split halves externally to facilitate better anchoring and gripping on the soil when the non-circular base unit (106) is buried in the ground (or land surface) during deployment of the optical fiber enclosure (102). A large bottom flange (1404) is provided to enhance both flat seating in a pit and anchoring once the non-circular base unit (106) is buried. Anchoring bolt holes (1402) are provided at the bottom flange (1404) used for surface mounting and deployment applications.

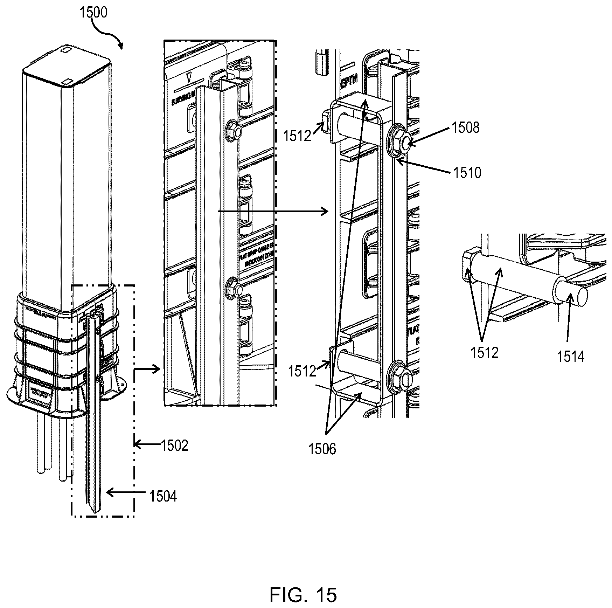

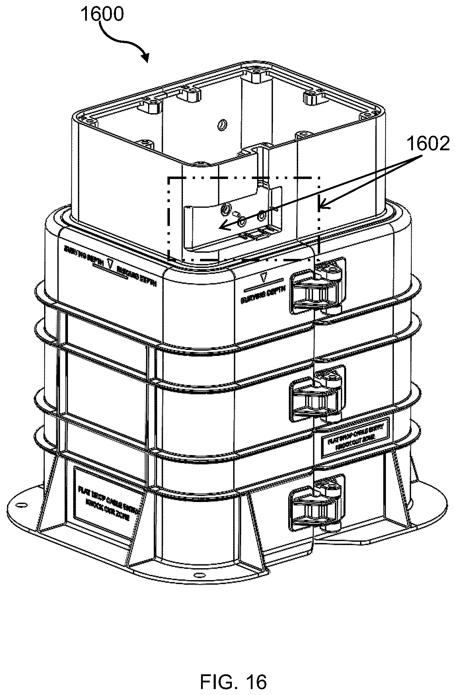

FIG. 15 is a pictorial snapshot illustrating a sectional exploded view (1500) of an anchoring stake module (or a grounding kit) (1502) integrated with the non-circular base unit (106). FIG. 16 is a pictorial snapshot illustrating a perspective view (1600) of the non-circular base unit (106) with a recessed pocket feature (1602) to house the auto-lock receiver (808).

The anchoring stake module (1502) is added from outside of the optical fiber enclosure (102) using spacer bolts (1512) at the two mounting holes (1118) in the non-circular base unit (106). The U-shaped channel (1504) is buried into the ground by hammering it down vertically to the marked levels. The two spacer bolts (1512) with rectangular / square heads are inserted from inside of the non-circular base unit (106) such that the heads of the two spacer bolts (1512) resist rotation.

In accordance with an embodiment of the present disclosure, a C-shaped spacer sheet metal bracket (1506) is mounted on two spacer bolt projections. This assembly is then guided into the U-shaped buried channel (1504) such that the threaded portions (i.e., external thread) (1514) of the two spacer bolts (1512) pass through the two mounting holes (1118) of the U-shaped channel (1504).

Further, the two spacer bolts (1512) are provided with flanged hexagonal nuts (1508) and a washer (1510) that are fixed and tighten on the bolt threads (i.e., external thread) (1514), thereby integrating the non-circular base unit (106) with the anchoring stake module (1502) and firmly rooting into the ground. Particularly, the gaps around the non-circular base unit (106) inside the pit are backfilled with the gravel / sand or soil that was removed to create the pit to bury the non-circular base unit (106) along with the anchoring stake module (1502).

In accordance with an embodiment of the present disclosure, the non-circular base unit (106) has the recessed pocket feature (1602) to house the auto-lock receiver (808). The non-circular base unit (106) also has a design option having plain flat wall instead of the recessed pocket feature (1602), wherein the plain flat wall is used where there is no need to install the auto-lock on it. Further, the non-circular base unit (106) has the first shell (1106) with the recessed pocket feature (1602) housing the auto-lock receiver (808) and the second shell (1108) with flat plain wall and no recessed pocket feature (1602).

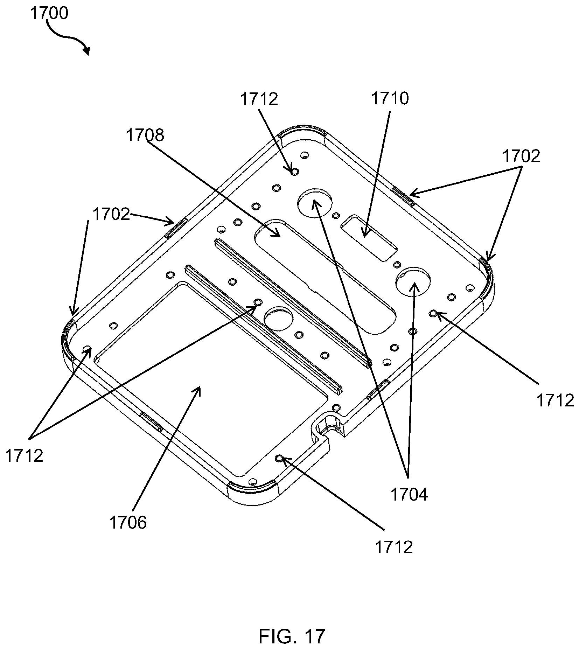

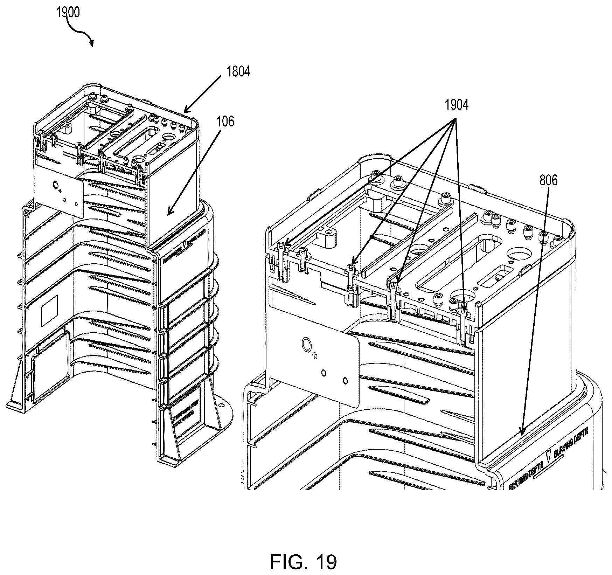

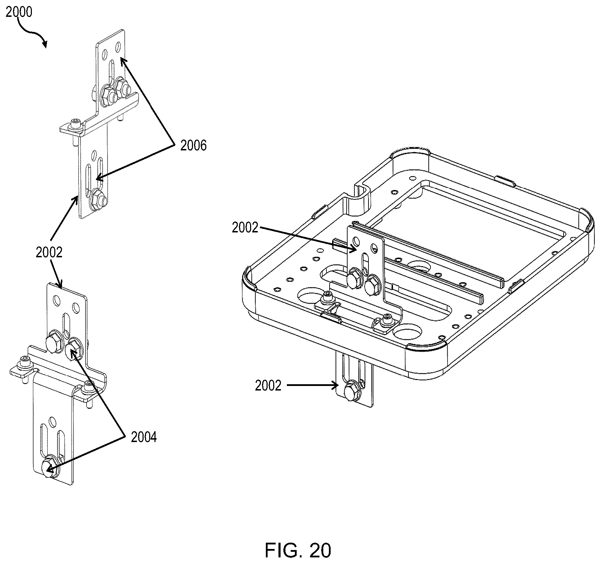

FIG. 17 to FIG. 18 illustrate top perspective views (1700-1800) of a primary chassis plate (1804) attached with a reinforcement metal plate (1802) to increase the stiffness of the primary chassis plate (1804). FIG. 19 illustrates a front perspective view (1900) of the non-circular base unit (106) after integrating the primary chassis plate (1804) with the non-circular base unit (106). FIG. 20 to FIG. 21 illustrate perspective views (2000-2100) of the primary chassis plate (1804) with various elements.

In accordance with an embodiment of the present disclosure, the primary chassis plate or the chassis plate (1804) is mounted on the connection end (1202) of the non-circular base unit (106). In particular, the chassis plate (1804) is sealed with a primary rubber seal and a secondary rubber seal on at least one side or at a periphery of the chassis plate (1804). Moreover, the primary chassis plate (1804) is made of high strength engineering thermoplastic. Further, the primary chassis plate (1804) has one or more recess (1704, 1706, 1708, 1710) for holding primary mid-span cables, distribution cables, flat drop and round drop cables and the grounding bracket (2002). Furthermore, the primary chassis plate (1804) has the threaded brass inserts (1712) for receiving one or more attachment mechanisms (e.g., threaded screws (1904)) to facilitate mounting of components such as, but not limited to, the reinforcement metal plate (1802), a looped chassis frame (2310), cable clamp brackets, flat and round drop cable mounting brackets, and the grounding bracket (2002).

In accordance with an embodiment of the present disclosure, the one or more attachment mechanisms (e.g., threaded screws) (1904) seated on the primary chassis plate (1804) may be enabled to secure it with the non-circular base unit (106). Further, the one or more attachment mechanisms (e.g., threaded screws) (1904) together with the primary chassis plate (1804) hold the two halves of the non-circular base unit (106) together and form a rigid box structure.

In accordance with an embodiment of the present disclosure, the reinforcement metal plate (1802) is used for increasing the stiffness and load bearing capacity of the primary chassis plate (1804) for deployment cases where there are heavy duty loads are to be mounted on the looped chassis frame (looped universal chassis frame) (2310) and on the primary chassis plate (1804). In particular, the reinforcement metal plate (1802) rests in a pocketed cavity (not shown) where the openings of the primary chassis plate (1804) are replicated on the reinforcement metal plate (1802) allowing access and assembly of all modules onto the integral metal plate reinforced primary chassis plate (1804).

In accordance with an embodiment of the present disclosure, the chassis plate (1804) includes the one or more recess (1704, 1706, 1708, 1710) to receive one or more optical fiber cables (2102) and other components used herein. In particular, the one or more recess (e.g., recess 1710) allows a grounding bracket (2002) to pass through it and to hold the corresponding one or more optical fiber cables (2102). The primary chassis plate (1804) holds the grounding bracket (2002) (e.g., double L-profile shaped grounding bracket module).

The grounding bracket (2002) includes two L shaped member (L shaped bracket) (2006) connected in a way that long arm of a first L backet is above the primary chassis plate (1804) and long arm of the second L bracket is below the primary chassis plate (1804). In particular, the grounding bracket (2002) projects above the primary chassis plate (1804) and receives grounding conductors from metallic bodies such as armour of cables and other metallic objects that needs to be grounded. Moreover, the grounding bracket (2002) projects below the primary chassis plate (1804) to facilitate grounding cable connection from grounding bracket (2002) to a copper plated grounding rod. The copper plated grounding rod is buried in the ground below the optical fiber enclosure (102). This arrangement enables complete grounding of the optical fiber enclosure (102) and all its metallic elements thereby ensuring safety to the personnel and the telecommunication equipment inside the optical fiber enclosure (102). Further, the grounding bracket (2002) includes the one or more fasteners (i.e., holding member or threaded fastener) (2004) to secure to the one or more optical cables (2102) and to secure grounding cable lugs to the grounding bracket (2002).

In accordance with an embodiment of the present disclosure, the primary chassis plate (1804) houses and holds solid stop cable clamp mounting brackets (one or more cable clamp) (2104) to further hold the optical fiber cables (2102) (such as the primary mid-span cables and the distribution cables). The one or more cable clamp (2104) with one or more solid stop member (2106, 2108) are mounted along with the one or more recess (1704, 1708) to stop a strength member of the optical fiber cables (2102). Further, the solid stop member (2106, 2108) prevents the growth of the strength member inside the optical fiber enclosure (102) as the strength members grows with the time because of environmental effects with shrinkage and melting.

In accordance with an embodiment of the present disclosure, position of the solid stop cable clamp mounting bracket (2104) is adjusted allowing variety of the optical fiber cables (2102), telecommunication cables and power cables to be secured, clamped and/ or grounded. Further, the solid stop cable clamp mounting bracket (2104) serves to hold one or more fiber strength members (such as fibre-reinforced plastics and/or wires) (2212) of the optical fiber cables (2102) firmly onto the pedestal and provides positive arresting of the central strength member of the optical fiber cables (2102) and thereby prevents growth of the central strength member into the optical zone of the optical fiber enclosure (102) and prevents damages.

In accordance with an embodiment of the present disclosure, chassis plate (1804) includes another recess (i.e., window (1706)) for mounting a drop cable assembly module (2201) alongside the window (1706). In particular, the drop cable assembly module (2201) may be a flat and/or a round drop cable module. Moreover, the drop cable assembly module (2201) facilitates the management of flat / round optical fiber cables in stepped rows independently. The primary chassis plate (1804) is provided with tapered guide lead-in features (1702).

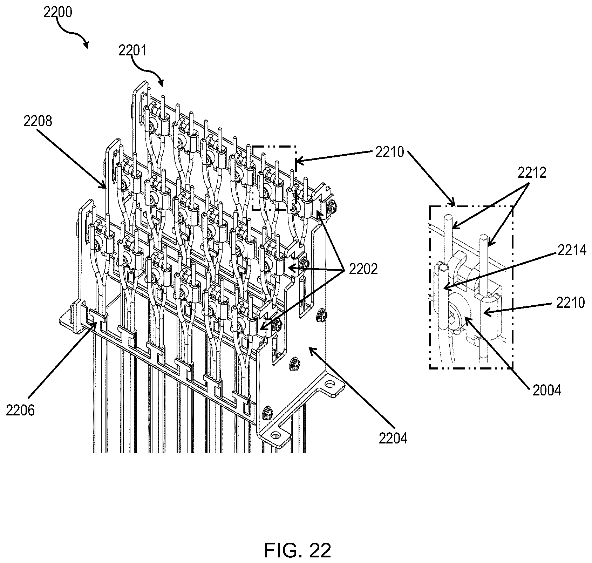

FIG. 22 is a pictorial snapshot illustrating a perspective view (2200) of the drop cable assembly module (2201). In particular, the drop cable assembly module (2201) includes two side plates (2204, 2208) in stepped manner for accommodating one or more cable brackets forming a drop cable bracket assembly (2202) that further has one or more fibre-reinforced plastic (FRP) brackets (2210) comprising the one or more fiber strength members (fiber-reinforced plastic rods or wires) (2212) and optical fiber loose tubes (2214). That is, each row of the drop cable bracket assembly (2202) includes multiple numbers of drop cable brackets. Each drop cable bracket assembly (2202) holds one drop cable (e.g., flat cable, round cable or the like).

In particular, three rows of drop cable brackets are stepped one below the other allowing direct access to the threaded fastener(s) (2004) on the drop cable bracket assembly (2202) at any of the locations. A drop cable tie bracket (2206) is located below the drop cable bracket assembly (2202). The drop cable tie bracket (2206) has T-shaped provisions to bind the drop cables with the bracket T-shape metal feature using cable ties for each of the cable. The drop cable bracket assembly (2202) has one drop cable FRP bracket (2210) on its each side.

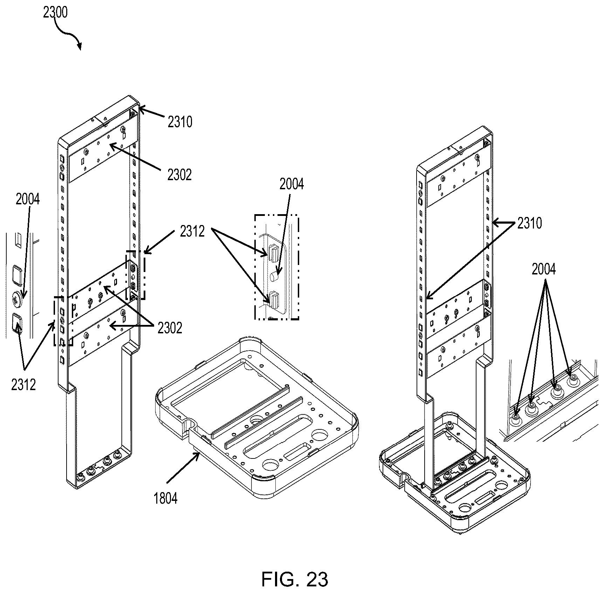

FIG. 23 is a pictorial snapshot illustrating a perspective view (2300) of the primary chassis plate (1804) locating and securing the looped mounting frame (2310). In particular, the looped mounting frame (2310) is mounted on the chassis plate (1804). The primary chassis plate (1804) locates and secures the looped mounting frame (2310) vertically (i.e., perpendicular to the primary chassis plate (1804)). The threaded fastener(s) (2004) secures and holds the looped mounting frame (2310) onto the primary chassis plate (1804).

The looped mounting frame (2310) is designed in a way that the looped mounting frame (2310) creates a closed looped structure to enhance load bearing strength of the looped mounting frame (2310) for mounting one or more optical components (e.g., splice trays, fiber storage module, patch panel, power backup battery module, CBT, splitter, or the like). Moreover, the looped mounting frame (2310) has a combination of rectangular and circular holes pattern distributed vertically which can be used to mount the one or more horizontal mounting plates (2302) at any required positions and facing either forward or backward. Further, the looped mounting frame (2310) accommodates the one or more horizontal mounting plates (2302) which can be mounted at any position vertically using the combination of hole patterns and the plastic snap-locks and the threaded fastener(s) (2004) and fastening means (2312).

In accordance with an embodiment of the present disclosure, the one or more horizontal mounting plates (2302) also have the same matching combination of rectangular and circular holes. The snap-lock parts have flexible limbs that enable them to flex when passing through the rectangular slots on both halves of the looped mounting frame (2310) and the one or more horizontal mounting plates (2302). The one or more horizontal mounting plates (2302) can be mounted facing either forward or backward relative to the looped mounting frame (2310).

In accordance with an embodiment of the present disclosure, a number of cross brackets are mounted between two side walls of the looped mounting frame (2310) and all the optical components such as but not limited to CBT, slack management module etc. are mounted over the cross brackets by using plurality of fastening means such as bolts. The slack management module stores and manages all the fiber cables inside the optical fiber enclosure (102).

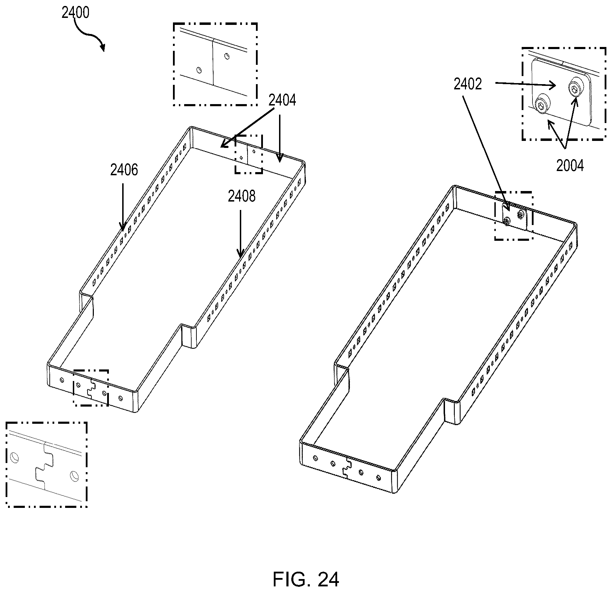

FIG. 24 is a pictorial snapshot illustrating a perspective view (2400) of the looped mounting frame (2310) with various elements. The looped mounting frame (2310) includes two identical halves (2404) mated with each other by one or more fasteners (2004). In particular, the looped mounting frame (2310) is stable and high strength platform for mounting accessory modules capable to taking extra load. Moreover, the identical halves (2404) assist in achieving proper alignment between two ends of the one or more horizontal mounting plates (2302). Further, the looped mounting frame (2310) includes two self-mating looped chassis halves (2404) where a first self-mating looped chassis halve (2406) is used to mate with a second self-mating looped chassis halve (2408) to form a closed looped universal chassis.

A special combination of U and C cut-outs on each of the haves enable two similar halves to interlock with one another and unite them at the bottom of the single loop. The special combination of U and C cut-outs after interlocking by the two halves at the bottom forms a closed loop as shown in FIG. 24. The same two halves face and touch each other at the top and this assembly is held together using the unite bracket plate (2402) and the threaded fastener(s) (2004). The two threaded holes on the loop and the two plain holes in the unite bracket plate (2402) align and allow the threaded fastener(s) (2004) to hold the two halves together.

In accordance with an embodiment of the present disclosure, the looped mounting frame (2310) includes two parallel arms (2406, 2408) perpendicular to the chassis plate (1804) to accommodate the one or more horizontal mounting plates (2302). In particular, the parallel arms (2406, 2408) enable efficient organization and placement of multiple components (i.e., optical component) within the optical fiber enclosure (102). Moreover, the one or more horizontal mounting plates (2302) are engaged between the two parallel arms (2406, 2408) by the one or more fasteners (2004). Further, the one or more fasteners (2004) may be snap-fit type fasteners or threaded screws based on size, weight and compatibility of the one or more optical components to be mounted. Hence, the one or more fasteners (2004) allow to mount multiple components in smaller space.

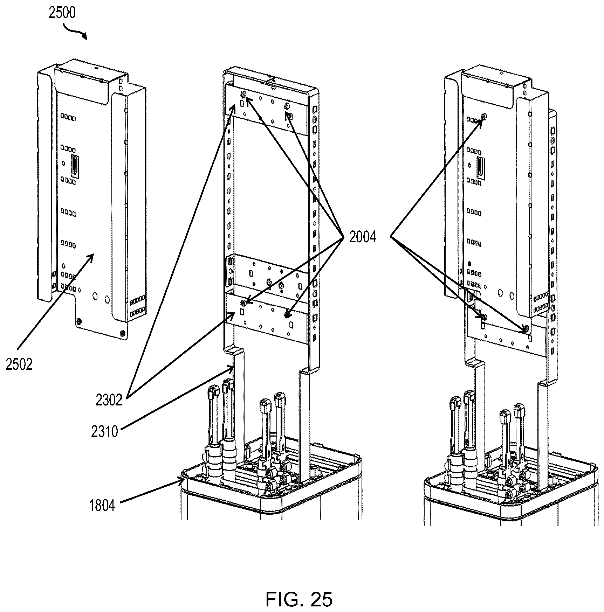

FIG. 25 is a pictorial snapshot illustrating an exploded perspective view (2500) of the looped mounting frame (2310) integrated with the non-circular base unit (106) holding the one or more optical component(s) (e.g., splice trays, fiber storage module, patch panel, power backup battery module, CBT, splitter, or the like).

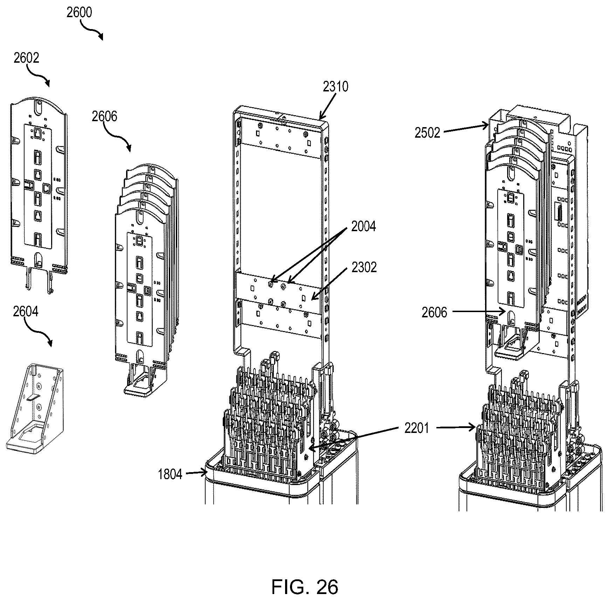

FIG. 26 is a pictorial snapshot illustrating another exploded perspective view (2600) of the non-circular base unit (106) holding the looped mounting frame (2310) with various optical components.

The non-circular top unit (402) includes a top compartment (404) for accommodating/covering a modular interface of the non-circular base unit (106) compatible for one or more optical components. In particular, the modular interface is a combination of entire mounting assembly including the chassis plate (1804), the looped mounting frame (2310) and the one or more horizontal mounting plates (2302). Moreover, the modular interface includes the chassis plate (1804) mounted on the connection end (1202) of the non-circular base unit (106) using one or more attachment mechanism (1904). Further, the modular interface includes the looped mounting frame (2310) mounted on the chassis plate (1804).

In accordance with an embodiment of the present disclosure, the modular interface is a compatible accessory module that facilitates easy integration of additional components, allowing for customized configurations and addressing challenges related to component placement in the optical fiber enclosure (102).

In accordance with an embodiment of the present disclosure, the one or more horizontal mounting plates (2302) holds the storage module (2502). The storage module (2502) stores and accommodates both mid span optical fiber loose tubes and normal optical fibre loose tubes brought into the optical fiber enclosure (102) by the primary and distribution of cables (2102). The storage module (2502) is mounted onto the one or more horizontal mounting plates (2302) at top and bottom of the looped mounting frame (2310) using the threaded fastener(s) (2004).

In accordance with an embodiment of the present disclosure, the looped mounting frame (2310) holds the splice tray module (2606). The splice tray module (2606) is mounted onto the one or more horizontal mounting plates (2302) of the looped mounting frame (2310) using the threaded fastener(s) (2004). The optical fiber loose tubes from the storage module (2502) are routed into the splice trays (2602) of the splice tray module (2606). The splice trays (2602) are rotatable and lockable by 90 degrees. The optical fiber loose tubes from the splice trays (2602) are spliced with the optical fibers from the drop cable assembly module (2201). The splice tray module (2606) is provided with a splice tray hub (2604).

Advantageously, the product's internal optical architecture achieves protection against flooding and water level rise around the buried pedestal by means of trapped air inside the non-circular top unit (402) primarily due to a bell jar effect.

Further, unlike existing optical fiber enclosures, the present disclosure provides an optical fiber enclosure and is related to a fiber pedestal unit used to store optical fibers and provides environmental protection to the stored optical fibers. In the optical fiber enclosure, a looped mounting frame is supported by a bottom bar over a primary chassis plate, so as to provide additional strength to the optical fiber enclosure. Moreover, the non-circular top unit and a non-circular base unit are formed by extrusion process; hence, it reduces manufacturing cost as well. The chassis plate is sealed with a primary rubber seal and a secondary rubber seal on a side of the chassis plate at a periphery of the chassis plate. The design of the optical fiber enclosure uses a cross bracket allowing a plurality of components configurations inside a housing of the optical fiber enclosure in a cost effective manner.

Additionally, the proposed disclosure addresses the problems associated with large sized enclosures and high density small enclosures. The optical fiber enclosure of the present disclosure is easy to install and provides easy and enhanced accessibility of the one or more optical fiber cables in a buried part of a high density enclosure.

The optical fiber enclosure includes an auto-lock feature while installing the non-circular top unit over the non-circular base unit. The non-circular top unit and the non-circular base unit allow for efficient utilization of space, accommodating larger components within a smaller footprint compared to circular designs of existing enclosure. Further, the auto-lock feature includes a bolt with spring leaf which gets pushed inside while installing the non-circular top unit and once the non-circular top unit is in-place, the bolt gets inserted into the holes inside the non-circular top unit. When someone wants to remove the non-circular top unit, a seal cap for the auto-lock access port (which is concealed by the seal cap) must be removed and the locking bolt has to be opened by using a tool. Hence, the optical fiber enclosure is easy to operate.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber enclosure (102), **characterized in that**:
a non-circular base unit (106) defined by one or more walls (1110, 1112) having a burying end (1204) and a connection end (1202), wherein the burying end (1204) is an open end and is configured for subterranean placement beneath a land surface; and
a non-circular top unit (402) defined by an open end (606) and a closed end (602), where the open end (606) of the non-circular top unit (402) is removably engageable with the connection end (1202) of the non-circular base unit (106),
wherein the one or more walls (1110, 1112) of the non-circular base unit (106) are removably hinged along adjacent vertical edges (1114) and partially openable to enable access to optical fiber components inside the non-circular base unit (106).

2. The optical fiber enclosure (102) as claimed in claim 1, wherein the one or more walls (1110, 1112) of the non-circular base unit (106) are configured to be opened individually to access a base compartment (1116) of the non-circular base unit (106) by unlocking exactly one vertical edge.

3. The optical fiber enclosure (102) as claimed in claim 1, wherein the non-circular base unit (106) has one more elevated ribs (1406, 1408) on an outer surface for firmly engaging the non-circular base unit (106) into the land surface.

4. The optical fiber enclosure (102) as claimed in claim 1, wherein the one or more walls (1110, 1112) are configured to be opened at an angle greater than 90 degrees from a locked position.

5. The optical fiber enclosure (102) as claimed in claim 1, wherein at least one of: the burying end (1204) and the connection end (1202) has a cross section that is a substantially rectangular or a substantially square.

6. The optical fiber enclosure (102) as claimed in claim 1, wherein the non-circular base unit (106) comprises an auto-lock receiver (808) that automatically engages with a striker-lock pin (608) of the non-circular top unit (402) to secure the open end (606) of the non-circular top unit (402) to the connection end (1202) of the non-circular base unit (106).

7. The optical fiber enclosure (102) as claimed in claim 1, wherein the non-circular base unit (106) comprises a compressed polymer sealing (806) configured to securely seal the open end (606) of the non-circular top unit (402) with the connection end (1202) of the non-circular base unit (106),

8. The optical fiber enclosure (102) as claimed in claim 7, wherein the compressed polymer sealing (806) enables sealing in the optical fiber enclosure (102) in a closed configuration and exerts lifting force on the non-circular top unit (402) to assist opening the optical fiber enclosure (102).

9. The optical fiber enclosure (102) as claimed in claim 1, wherein the non-circular top unit (402) comprises a top compartment (404) for accommodating a modular interface compatible for one or more optical components.

10. The optical fiber enclosure (102) as claimed in claim 1, wherein the modular interface comprises a chassis plate (1804) mounted on the connection end (1202) of the non-circular base unit (106).

11. The optical fiber enclosure (102) as claimed in claim 10, wherein the modular interface comprises a looped mounting frame (2310) mounted on the chassis plate (1804),

12. The optical fiber enclosure (102) as claimed in claim 11, wherein the looped mounting frame (2310) comprises two identical halves (2404) mated with each other by one or more fasteners (2004).

13. The optical fiber enclosure (102) as claimed in claim 10, wherein the looped mounting frame (2310) includes two parallel arms (2406, 2408) perpendicular to the chassis plate (1804) to accommodate one or more horizontal mounting plates (2302).

14. The optical fiber enclosure (102) as claimed in claim 11, wherein the one or more horizontal mounting plates (2302) are engaged between the two parallel arms (2406, 2408) by one or more fasteners (2004).

15. The optical fiber enclosure (102) as claimed in claim 11, wherein one or more optical components are mounted on the one or more horizontal mounting plates (2302) by using one or more fasteners (2004).
